# EUROPEAN PATENT SPECIFICATION

(11) **EP 3 012 661 B1**
(45) Date of publication and mention of the grant of the patent: **13.02.2019**
(21) Application number: 14814603.8
(22) Date of filing: 12.06.2014
(51) Int. Cl.: G01S 15/52, G01S 7/534

(54) **MOBILE-BODY DETECTION DEVICE**
VORRICHTUNG ZUR ERKENNUNG MOBILER KÖRPER
DISPOSITIF DE DÉTECTION DE CORPS MOBILE

(30) Priority: 18.06.2013 JP 2013127865
(43) Date of publication of application: 27.04.2016
(73) Proprietor: Panasonic Intellectual Property Management Co., Ltd., Osaka-shi, Osaka 540-6207 (JP)
(72) Inventor: MUGIUDA, Toru, Osaka 540-6207 (JP); GOTO, Kazushi, Osaka 540-6207 (JP)
(74) Representative: Appelt, Christian W.
(86) International application number: PCT/JP2014/003141
(87) International publication number: WO 2014/203504

(56) References cited:
- EP-A1- 1 845 626
- EP-A1- 2 088 452
- WO-A1-2006/075631
- JP-A- S63 275 917
- JP-A- S63 275 917
- JP-A- 2005 142 867
- JP-A- 2005 142 867
- JP-A- 2007 183 182
- JP-A- 2008 145 255
- JP-A- 2013 079 855
- JP-A- 2013 079 855
- US-A1- 2007 001 755

## Description

### TECHNICAL FIELD

This invention generally relates to moving body detection devices, and more specifically relates to a moving body detection device configured to detect the presence of a moving body inside a monitoring space by emitting a continuous energy wave such as an ultrasonic wave or a radio wave into the monitoring space and detecting a frequency shift, of a reflected wave, that is generated by a movement of an object inside the monitoring space.

### BACKGROUND ART

A moving body detection device described in Document 1 (JP 2013-79855A) is illustrated as a conventional example. The conventional example described in Document 1 includes an oscillation circuit, a transmitter, a receiver, a phase detection portion, a moving body determination portion, a phase shift circuit, and the like. The oscillation circuit is configured to output an oscillation signal (hereinafter referred to as "first oscillation signal") having a frequency of several tens of kHz from two output ends separately. The transmitter receives the first oscillation signal that is outputted from one output end of the oscillation circuit, and transmits an ultrasonic wave having a frequency that is equal to the oscillation frequency (several tens of kHz) to a monitoring space. The receiver receives an ultrasonic wave that comes from the monitoring space, converts the ultrasonic wave into an electric signal (reception signal), and outputs the converted reception signal to the phase detection portion. The phase shift circuit is a circuit for shifting the phase of the first oscillation signal by π/2. Note that the oscillation signal whose phase is shifted by the phase shift circuit is referred to as a second oscillation signal.

The phase detection portion includes: a first phase detection block constituted by a mixer, a filter, and an amplification circuit; and a second phase detection block constituted by a mixer, a filter, and an amplification circuit. The mixer in the first phase detection block mixes (multiplies) the first oscillation signal and the reception signal, and thereby outputs components (signals) that are the difference and summation of frequencies of the two signals. Similarly, the mixer in the second phase detection block mixes (multiplies) the second oscillation signal and the reception signal, and thereby outputs components (signals) that are the difference and summation of frequencies of the two signals. Note that the signal (the signal to be mixed with the reception signal) that is inputted to the mixer does not necessarily need to be the oscillation signal (first oscillation signal or second oscillation signal), and may be a periodic signal whose frequency is the same as that of the oscillation signal.

The filter of the first phase detection block is constituted by a low pass filter, and only passes signals (Doppler signal and DC component signal) that are frequency difference components of the first oscillation signal and the reception signal among the two types of signals that are outputted from the mixer. Similarly, the filter of the second phase detection block is constituted by a low pass filter, and only passes signals (Doppler signal and DC component signal) that are frequency difference components of the second oscillation signal and the reception signal among the two types of signals that are outputted from the mixer. Note that the reception signal includes a signal whose frequency is shifted due to being reflected by a moving body and a signal whose frequency is not shifted due to being reflected by a stationary object. Accordingly, the frequency difference component signals include not only the Doppler signal but also a DC component signal. The amplification circuit of each of the phase detection blocks amplifies the Doppler signal that has passed through the filter thereof. Also, a high pass filter (capacitor for cutting DC) is inserted between the filter and the amplification circuit in each of the phase detection blocks. Accordingly, the DC component signal is removed from the frequency difference component signals, and only the Doppler signal is outputted from each high pass filter.

The moving body determination portion, upon determining that the Doppler signals that are amplified by the amplification circuits are signals due to a movement component, determines (detects) that a moving body exists in the monitoring space and outputs a detection signal. Note that the detection signal that is outputted from the moving body determination portion is sent to an ECU (Electronic Control Unit) of a car, and the ECU reports an intrusion of a suspicious person into the car by sounding a warning sound (car horn sound) or the like, for example.

Also, a conventional example described in Document 2 (JP 2008-145255A) detects a moving body by transmitting two transmission signals having different frequencies from an oscillation circuit. The conventional example described in Document 2 is configured to determine that a moving body exists in a monitoring space only when a moving body is detected with each of the transmission signals respectively having different frequencies. According to the conventional example described in Document 2, an erroneous detection of a moving body can be prevented even when a large energy wave (sound wave having an extremely high sound pressure level) comes from outside the monitoring space (outside the car), for example.

Incidentally, the moving body detection device as described above is supplied power from a battery that is built into a car when used in an application for monitoring the inside of a parked car. However, because the battery in the car is not charged when an engine of the car stops, the power consumption of the moving body detection device is required to be reduced in order to prevent the battery from being exhausted while the car is parked. The power consumption per unit time can be reduced by operating the moving body detection device intermittently compared with a case where the device is operated continuously, for example.

However, in the case where the conventional example described in Document 1 is operated intermittently, the moving body determination portion cannot perform determination correctly in a period until the circuit operation stabilizes (specifically, in the period until the operation of the high pass filter stabilizes). On the other hand, in the case where circuits including the moving body determination portion are operated in the period until the circuit operation stabilizes, there is a problem in that there is a decrease in the amount by which power consumption is reduced.

Also, although it is desirable that the cutoff frequency of the high pass filter is decreased in order to detect a slow-moving moving body, there is a disadvantage in that the time period until the operation stabilizes increases.
Furthermore, document JP 2013-079855 A discloses a moving body detector with an oscillation circuit, a transmitter, a receiver, a phase detection portion, a moving body determination portion and a control portion, wherein the phase detection portion comprising a mixer, a low pass filter, a high pass filter and an amplifier.
Further relevant devices are disclosed in JP 2005-142867 A, JP S63-275-917 A and EP 1 845 626 A1.

### SUMMARY OF INVENTION

The present invention has been made in view of the above-described problems, and an object of the present invention is to provide a moving body detection device in which a time period until the operation thereof stabilizes is reduced while suppressing a reduction in accuracy in detecting a slow-moving moving body.

The object of the present invention is solved by a moving body detection device according to claim 1, claims 2 to 4 relate to specifically advantageous realizations of the moving body detection device according to claim 1.

A moving body detection device according to an aspect of the present invention includes an oscillation circuit, a transmitter, a receiver, a phase detection portion, a moving body determination portion, and a control portion. The oscillation circuit is configured to output an oscillation signal having a predetermined frequency. The transmitter is configured to transmit to a monitoring space a continuous energy wave whose amplitude changes periodically based on the oscillation signal that is outputted from the oscillation circuit. The receiver is configured to receive a reflected wave that is generated by the continuous energy wave being reflected by an object that exists in the monitoring space, and output a reception signal. The phase detection portion is configured to mix the oscillation signal and the reception signal to obtain a Doppler signal that depends on the frequency difference between the oscillation signal and the reception signal. The moving body determination portion is configured to detect a moving body in the monitoring space by performing signal processing on the Doppler signal, and output a detection signal. The phase detection portion includes a mixer, a low pass filter, a high pass filter, and an amplifier. The mixer is configured to mix the oscillation signal and the reception signal. The low pass filter is configured to pass only a frequency component that is less than or equal to a first cutoff frequency that is lower than a frequency of the oscillation signal. The high pass filter is configured to switch a second cutoff frequency that is lower than the first cutoff frequency, and pass only a frequency component that is greater than or equal to the second cutoff frequency. The amplifier is configured to amplify an output signal that has passed through the low pass filter and the high pass filter. The phase detection portion is configured to regard an output signal of the amplifier as the Doppler signal. The control portion is configured to control the high pass filter such that the second cutoff frequency that is applied during a period from when the transmitter starts transmitting the continuous energy wave until a predetermined waiting time elapses is higher than the second cutoff frequency that is applied in a period after the waiting time elapses.

### BRIEF DESCRIPTION OF DRAWINGS

FIG. 1 is a block diagram illustrating a moving body detection device according to an embodiment;
FIG. 2 is a circuit diagram illustrating a high pass filter in the moving body detection device according to the embodiment;
FIG. 3 is a time chart for describing an operation of the moving body detection device according to the embodiment;
FIG. 4 is a time chart for describing an operation of the moving body detection device according to the embodiment;
FIG. 5 is a waveform diagram for describing an operation of the moving body detection device according to the embodiment; and
FIG. 6 is a waveform diagram for describing an operation of the moving body detection device according to the embodiment.

### DESCRIPTION OF EMBODIMENTS

Hereinafter, a moving body detection device 100 according to an embodiment of the present invention will be described in detail with reference to the drawings. Note that although an ultrasonic wave is used as a continuous energy wave in the moving body detection device 100 of the present embodiment, similarly to the conventional example, the technical concept of the present invention can also be applied in the case where a radio wave is used instead of the ultrasonic wave.

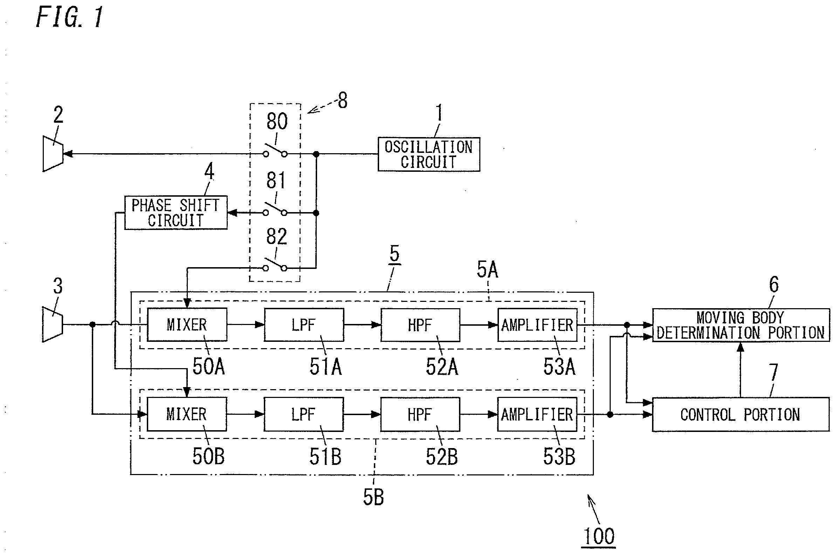

The moving body detection device 100 of the present embodiment includes an oscillation circuit 1, a transmitter 2, a receiver 3, a phase shift circuit 4, a phase detection portion 5, a moving body determination portion 6, a control portion 7, a mode switching portion 8, and the like, as shown in FIG. 1. The oscillation circuit 1 is configured to output a first oscillation signal (sine wave signal) having a frequency of several tens of kHz. The transmitter 2 is configured to receive the first oscillation signal that is outputted from the oscillation circuit 1 and then transmit an ultrasonic wave having a frequency that is equal to the oscillation frequency (several tens of kHz) to a monitoring space. The receiver 3 is configured to receive an ultrasonic wave that comes from the monitoring space, convert the ultrasonic wave into an electric signal (reception signal), and output the converted reception signal to the phase detection portion 5. The phase shift circuit 4 is a circuit for shifting the phase of the first oscillation signal by π/2. Note that the oscillation signal whose phase is shifted by the phase shift circuit 4 is referred to as a second oscillation signal.

The phase detection portion 5 includes a first phase detection block 5A and a second phase detection block 5B. The first phase detection block 5A is constituted by a mixer 50A, a low pass filter 51A, a high pass filter 52A, and an amplifier 53A. The second phase detection block 5B is constituted by a mixer 50B, a low pass filter 51B, a high pass filter 52B, and an amplifier 53B.

The mixer 50A in the first phase detection block 5A mixes (multiplies or adds) the first oscillation signal and the reception signal, and thereby outputs components (signals) that are the difference and summation of frequencies of the two signals. Similarly, the mixer 50B in the second phase detection block 5B mixes (multiplies or adds) the second oscillation signal and the reception signal, and thereby outputs components (signals) that are the difference and summation of frequencies of the two signals. Note that the signal (the signal to be mixed with the reception signal) that is inputted to the mixers 50A and 50B does not necessarily need to be the oscillation signal (first oscillation signal or second oscillation signal), and may be a periodic signal whose frequency is the same as that of the oscillation signal.

The low pass filter (LPF) 51A in the first phase detection block 5A only passes signals (Doppler signal and DC component signal) that are frequency difference components of the first oscillation signal and the reception signal among the two types of signals that are outputted from the mixer 50A. Similarly, the LPF 51B in the second phase detection block 5B only passes signals (Doppler signal and DC component signal) that are frequency difference components of the second oscillation signal and the reception signal among the two types of signals that are outputted from the mixer 50B. In other words, the LPFs 51A and 51B each only pass frequency components that are equal to or less than a first cutoff frequency that is lower than the frequency of the oscillation signal (first oscillation signal or second oscillation signal). Note that the reception signal includes a signal whose frequency is shifted due to being reflected by a moving body and a signal whose frequency is not shifted due to being reflected by a stationary object. Accordingly, the frequency difference component signals include not only the Doppler signal but also the DC component signal.

Also, the high pass filters (HPFs) 52A and 52B respectively only pass frequency components that are greater than or equal to a predetermined cutoff frequency from the output signals of the respective LPFs 51A and 51B. In other words, HPFs 52A and 52B respectively only pass frequency components that are greater than or equal to respective second cutoff frequencies that are lower than the respective first cutoff frequencies of the LPFs 51A and 51B. Accordingly, the DC component signal is removed from the frequency difference component signals, and only the Doppler signal is outputted from each of the HPFs 52A and 52B. Note that the second cutoff frequencies of the HPFs 52A and 52B are preferably set to a frequency corresponding to the moving speed of the moving body that is the detection target (frequency of several tens of Hz in the case where the moving body is a person, for example).

The moving body determination portion 6, upon determining that the signals (Doppler signals) that are respectively amplified by the amplifiers 53A and 53B are signals due to a movement component, determines (detects) that a moving body exists in the monitoring space and outputs a detection signal. Note that the determination processing performed by the moving body determination portion 6 is conventionally known, as disclosed also in Document 1, and thus detailed description thereof will be omitted. Note that the detection signal that is outputted from the moving body determination portion 6 is sent to an ECU (Electronic Control Unit) of a car, for example. The ECU, upon receiving the detection signal, reports an intrusion of a suspicious person into the car by sounding a warning sound (car horn sound) or the like, for example.

The mode switching portion 8 includes switches 80, 81, and 82 that are respectively inserted between an output end of the oscillation circuit 1 and an input end of the transmitter 2, between the output end of the oscillation circuit 1 and an input end of the phase shift circuit 4, and between the output end of the oscillation circuit 1 and an input end of the mixer 50A. That is, when the mode switching portion 8 is off (all the switches 80, 81, and 82 are off), the transmitter 2, the phase shift circuit 4, and the mixers 50A and 50B are each in a halt state. On the other hand, when the mode switching portion 8 is on (all the switches 80, 81, and 82 are on), the transmitter 2, the phase shift circuit 4, and the mixers 50A and 50B are each in an operating state. If the transmitter 2, the phase shift circuit 4, and the mixers 50A and 50B are in the halt state, the power consumption of the moving body detection device 100 of the present embodiment is greatly reduced compared with a case where the transmitter 2, the phase shift circuit 4, and the mixers 50A and 50B are in the operating state.

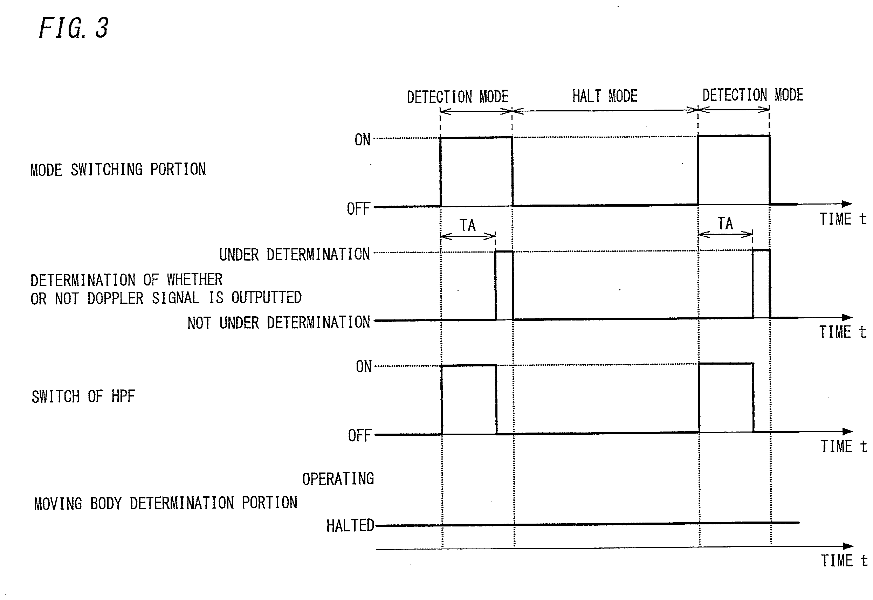

The control portion 7 is configured to control the mode switching portion 8, and operates such that a halt mode of causing the mode switching portion 8 to be turned off and a detection mode of causing the mode switching portion 8 to be turned on are periodically switched (refer to FIG. 3). Also, the control portion 7 has a function of switching the moving body determination portion 6 to one of an operating state and a halt state. The power consumption of the moving body determination portion 6 is greatly reduced in the halt state compared with that in the operating state.

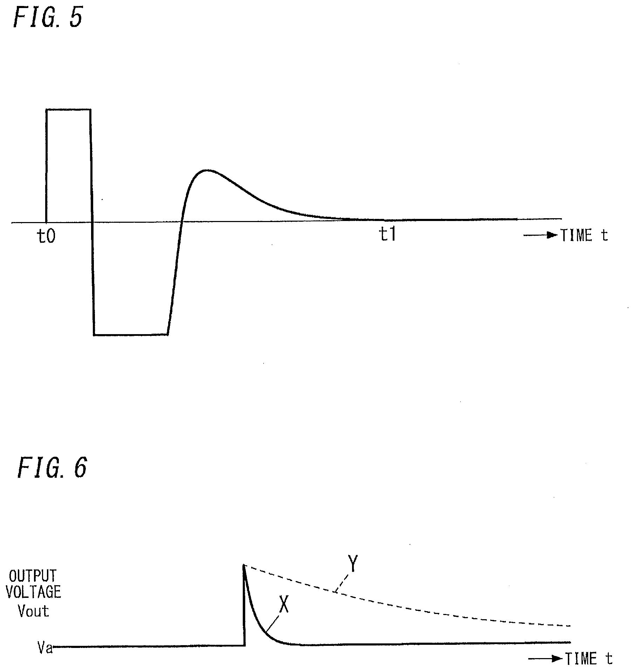

Incidentally, in the case where the pause mode and the detection mode are switched periodically, as described above, a fluctuation occurs in each of the output signals of the HPFs 52A and 52B due to the DC component in a period immediately after the detection mode has started (time t = t0) (refer to the portion having a square wave-like shape in FIG. 5). After the fluctuation due to the DC component has settled (after time t = t1), if a moving body does not exist in the monitoring space, the signal levels of the output signals of the HPFs 52A and 52B each settle to a constant value (refer to FIG. 5). Accordingly, as will be described later, the probability of erroneous determination increases if the control portion 7 determines whether or not the Doppler signal is outputted until the fluctuation due to the DC component settles. Therefore, the control portion 7 preferably determines whether or not the Doppler signal is outputted after the fluctuation due to the DC component has settled (converged) in order to suppress erroneous determination.

Here, it is desirable that the period of the detection mode be as short as possible when a moving body does not exist in order to reduce power consumption. In order to shorten the period of the detection mode, it is preferable that a period (period from time t = t0 to time t = t1 in FIG. 5) until the circuit operation stabilizes be shortened as much as possible. Increasing the cutoff frequencies (second cutoff frequencies) of the HPFs 52A and 52B is conceivable as a method for shortening this period. For example, a case where the HPFs 52A and 52B are each configured by a differentiation circuit constituted by a capacitor (capacitance "C") and a resistor (resistance circuit) (resistance value "R") is conceivable. In this case, because the cutoff frequency fc is expressed as fc = 1/(2πRC), the cutoff frequency fc increases by reducing the resistance value "R" of the resistance circuit.

However, the lower limit value of the detectable moving speed increases as the cutoff frequencies fc of the HPFs 52A and 52B are increased, and therefore the accuracy in detecting a slow-moving moving body (a body that moves slowly) decreases. Accordingly, in order to secure the accuracy in detecting a slow-moving moving body, it is preferable to decrease the cutoff frequencies fc of the HPFs 52A and 52B.

Thus, it is preferable to make the cutoff frequencies fc of the HPFs 52A and 52B variable. At the start point of the detection mode, the cutoff frequencies fc of the HPFs 52A and 52B may be set relatively high in order to stabilize the circuit operation in a short period, and thereafter the cutoff frequencies fc of the HPFs 52A and 52B may be set relatively low.

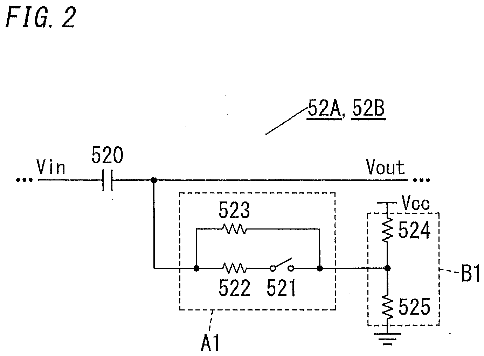

For example, the HPFs 52A and 52B may be each constituted by a capacitor 520, a plurality of resistors 522 to 525, and a switch 521 that is turned on and off by the control portion 7, as shown in FIG. 2. The resistor 522 is electrically connected in series to the switch 521, and furthermore the resistor 523 is electrically connected in parallel to a series circuit of the resistor 522 and the switch 521. A connection point of the two resistors 522 and 523 is electrically connected to one end on an output side of the capacitor 520, and a connection point of the switch 521 and the resistor 523 is electrically connected to a midpoint (connection point) of a series circuit of the resistors 524 and 525. The two resistors 524 and 525 are electrically connected between a controll power supply Vcc, which is a predetermined DC power supply, and ground. That is, a first end of the two ends of the series circuit of the two resistors 524 and 525 is electrically connected to the controll power supply Vcc, and a second end of the two ends is electrically connected to ground.

In each of the HPFs 52A and 52B, an input voltage is expressed as Vin and an output voltage is expressed as Vout. In the case where the Doppler signal is not outputted, the output voltage Vout (voltage after time t = t1, in FIG. 5) after the operation stabilizes serves as a reference voltage value Va. Note that the reference voltage value Va is expressed as Va = Vcc1×R4/(R3+R4). Here, "R3" is a resistance value of the resistor 524, and "R4" is a resistance value of the resistor 525. Also, "Vcc1" is a power supply voltage of the controll power supply Vcc.

Also, the time constant τ1 of each of the HPFs 52A and 52B in a state (on state) in which the switch 521 is closed is expressed as τ1 = C×(Ra+Rb), where Ra = R1×R2/(R1+R2) and Rb = R3×R4/(R3+R4). Here, "R1" is a resistance value of the resistor 523, and "R2" is a resistance value of the resistor 522. Also, "Ra" is a resistance value of a combined resistance of the resistors 522 and 523, and "Rb" is a resistance value of a combined resistance of the resistors 524 and 525.

Here, if the resistance value "R2" of the resistor 522 is sufficiently smaller than the resistance value "R1" of the resistor 523, the resistance value "Ra" of the combined resistance is regarded as being substantially equal to the resistance value "R2" of the resistor 522. Therefore, the time constant τ1 can be regarded as τ1 = C×(R2+Rb).

On the other hand, the time constant τ2 of each of the HPFs 52A and 52B in a state (off state) in which the switch 521 is open is expressed as τ2 = C×(R1+Rb). Assuming that the resistance value "R1" is 1MΩ, the resistance value "R2" is 1kΩ, and the resistance values "R3" and "R4" are each 100kΩ, for example, the resistance value "Rb" of the combined resistance will be 50kQ, and the time constant τ2 will be approximately 20 times the time constant τ1. That is, here, a resistance circuit A1 is constituted by the resistors (first resistors) 522 and 523 and the switch (switch element) 521. The control portion 7 is configured to change the combined resistance value of the resistance circuit A1 by switching the switch 521 on and off.

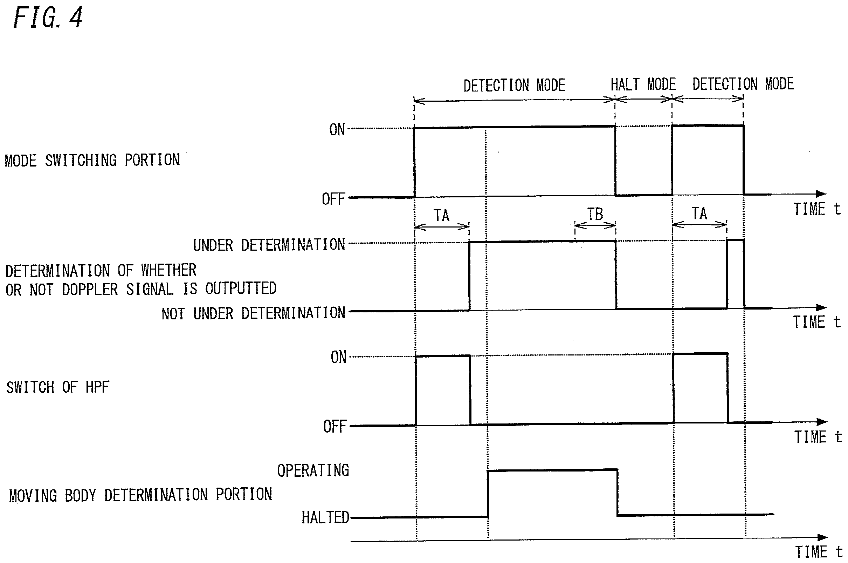

Next, operations of the moving body detection device 100 of the present embodiment will be described, focusing on a control operation of the control portion 7, with reference to the time charts in FIGS. 3 and 4.

The control portion 7 sets the time constant τ of each of the HPFs 52A and 52B to "τ1" by turning on the switch 521 in a period from when the detection mode is started by turning on the mode switching portion 8 until a predetermined waiting time TA elapses, as shown in FIG. 3. Then, when the waiting time TA has elapsed, the control portion 7 sets the time constant τ of each of the HPFs 52A and 52B to "τ2" by turning off the switch 521, and determines whether or not the Doppler signal is outputted from the phase detection portion 5 (presence or absence of the Doppler signal).

Here, in the case where the time constant τ of each of the HPFs 52A and 52B in the waiting time TA is "τ2", a very long period of time is required until the output voltage Vout settles to the reference voltage value Va as shown by the broken line Y in FIG. 6. However, if the time constant τ of each of the HPFs 52A and 52B in the waiting time TA is switched to "τ1" as described above, the period of time until the output voltage Vout settles to the reference voltage value Va can be greatly reduced, as shown by the solid line X in FIG. 6. Furthermore, because the output voltage Vout, when each of the operations of the HPFs 52A and 52B stabilizes settles to the reference voltage value Va regardless of whether the time constant τ is switched to "τ1" or "τ2", change of the output voltage Vout accompanying the change of the resistance value can be suppressed. That is, the HPFs 52A and 52B each include a series circuit of the resistors (second resistors) 524 and 525 as a suppression circuit B1 that suppresses the change in the signal level of the output signal Vout that accompanies the change of the combined resistance value of the resistance circuit A1.

After the fluctuation due to the DC component has settled (after time t = t1), if a moving body does not exist in the monitoring space, the signal levels of the output signals of the HPFs 52A and 52B each settle to a constant value (refer to FIG. 5). On the other hand, if a moving body exists in the monitoring space, the signal levels of the output signals of the respective HPFs 52A and 52B change in accordance with the speed of the moving body, and the amplifiers 53A and 53B each output the Doppler signal.

Accordingly, if the signal level of at least one of the output signals, among the output signals of the two amplifiers 53A and 53B, is greater than or equal to a lower limit value (a value larger than the above constant value), the control portion 7 determines that the Doppler signal is outputted. Also, if the signal level of the output signal of each of the amplifiers 53A and 53B is less than the lower limit value, the control portion 7 determines that the Doppler signal is not outputted.

The control portion 7, upon determining that the Doppler signal is not outputted, switches from the detection mode to the halt mode by turning off the mode switching portion 8, and switches from the halt mode to the detection mode by again turning on the mode switching portion 8 at a point of time when a predetermined halt period has elapsed (refer to FIG. 3). Note that the control portion 7 causes the moving body determination portion 6 to be in the halt state, unless the Doppler signal is determined to be outputted in the detection mode.

On the other hand, the control portion 7, upon determining that the Doppler signal is outputted, continues the detection mode, and switches the moving body determination portion 6 from the halt state to the operating state (refer to FIG. 4). Then, the moving body determination portion 6 performs signal processing on the two Doppler signals that are outputted from the phase detection portion 5, and determines (detects) whether or not a moving body exists. Note that the control portion 7 continues to determine whether or not the Doppler signal is outputted for the duration of the detection mode. When the period during which the Doppler signal is determined to not be outputted reaches a predetermined period TB (≥ t1- t0), the control portion 7 switches to the halt mode by turning off the mode switching portion 8 and switches the moving body determination portion 6 to the halt state.

As described above, the moving body detection device 100 of the present embodiment causes some portion of the circuits (phase shift circuit 4 and phase detection portion 5) to operate intermittently, and thereby power consumption can be reduced. Furthermore, in the moving body detection device 100 of the present embodiment, the control portion 7 does not perform determination of a moving body by the moving body determination portion 6 at the time when the mode is switched from the halt mode to the detection mode. The control portion 7 waits until the circuit operation stabilizes, and thereafter causes the moving body determination portion 6 to operate only when there is a possibility that a moving body exists (in the case of determining that the Doppler signal is outputted). Therefore, the moving body detection device 100 of the present embodiment can reduce the possibility that the moving body determination portion 6 erroneously determines (erroneously detects) that a moving body does or does not exist. That is, the power consumption of the moving body detection device 100 of the present embodiment can be reduced while suppressing a reduction in accuracy in detecting a moving body.

Furthermore, the moving body detection device 100 of the present embodiment reduces a convergence time of the fluctuation due to a DC component by setting the cutoff frequencies (second cutoff frequency) fc of the HPFs 52A and 52B in the waiting time TA to relatively high values (by decreasing the time constants τ). Accordingly, the moving body detection device 100 of the present embodiment can reduce a time required until the operation stabilizes. On the other hand, the moving body detection device 100 of the present embodiment sets the cutoff frequencies fc of the HPFs 52A and 52B to relatively low frequencies after the waiting time TA elapses (increases the time constants τ). Accordingly, the moving body detection device 100 of the present embodiment can suppress a reduction in accuracy in detecting a slow-moving moving body. Note that, in the moving body detection device 100 of the present embodiment, although the control portion 7 causes some of the circuits to operate intermittently, intermittent operation need not necessarily be performed, and the technical concept of the present invention can be applied even in a case where intermittent operation is not performed.

Incidentally, in the moving body detection device 100 of the present embodiment, the phase detection portion 5 is constituted by the first phase detection block 5A and the second phase detection block 5B. The first phase detection block 5A includes the mixer 50A, the LPF 51A, the HPF 52A, and the amplifier 53A. Similarly, the second phase detection block 5B includes the mixer 50B, the LPF 51B, the HPF 52B, and the amplifier 53B. Furthermore, the phase of the oscillation signal (second oscillation signal) that is inputted to the mixer 50B in the second phase detection block 5B is shifted by π/2 relative to the oscillation signal (first oscillation signal) that is inputted to the mixer 50A in the first phase detection block 5A.

That is to say, depending on the timing at which the output signal of the amplifier 53A is observed, the signal level of the output signal may possibly be small. However, in the moving body detection device 100 of the present embodiment, the two phase detection blocks 5A and 5B respectively generate the Doppler signals at the same time in parallel, and the phases of the signals (first oscillation signal and second oscillation signal) that are to be mixed with the reception signal in the respective phase detection blocks 5A and 5B are shifted from each other. Therefore, in the moving body detection device 100 of the present embodiment, whether or not the Doppler signal is outputted can be determined quickly and reliably, because, when one of the output signals of the two amplifiers 53A and 53B decreases, the other output signal increases.

That is, in order to find an inflection point (peak value) of the output signal of one amplifier 53A (or amplifier 53B), a period corresponding to a half cycle of the output signal is needed at maximum. However, in order to find an inflection point of one of the output signals of the two amplifiers 53A and 53B, only a period corresponding to a quarter cycle of the output signal is needed at maximum. Therefore, the period needed for the control portion 7 to determine whether or not the Doppler signal is outputted can be reduced. Here, the square root of the sum of squares of the two output signals corresponds to the amplitude of the Doppler signal. Accordingly, the control portion 7 may determine whether or not the Doppler signal is outputted by comparing the sum of squares of the two output signals with a threshold, instead of separately comparing the output signals of the amplifiers 53A and 53B with a lower limit value. As a result of determining whether or not the Doppler signal is outputted from the sum of squares of the output signals of the amplifiers 53A and 53B, whether or not the Doppler signal is outputted can be determined in a shorter period of time, because the frequency (phase) of the output signal attributed to the speed of the moving body need not be considered.

Note that the technical concept of the present invention can be applied to the conventional example described in Document 2. The conventional example described in Document 2 is configured to transmit two transmission signals having different frequencies from an oscillation circuit to detect a moving body, and determine that a moving body exists in a monitoring space only when the moving body is detected with each of the transmission signals respectively having different frequencies. In such a configuration also, as a result of making the cutoff frequency (time constant) of the HPF variable and increasing the cutoff frequency (decreasing the time constant) in a period in which a fluctuation due to a DC component occurs, the period can be reduced. Furthermore, in such a configuration also, as a result of reducing the cutoff frequency of the HPF (increasing the time constant) after the fluctuation due to the DC component has converged, a reduction in accuracy in detecting a slow-moving moving body can be suppressed.

Also, although the moving body detection device 100 of the present embodiment is configured such that the HPFs 52A and 52B are provided downstream of the respective LPFs 51A and 51B, the configuration may be such that the LPFs 51A and 51B are provided downstream of the respective HPFs 52A and 52B.

As described above, the moving body detection device 100 of the present embodiment has the following first feature.

According to the first feature, the moving body detection device 100 includes, an oscillation circuit (oscillation means) 1, a transmitter (transmission means) 2, a receiver (reception means) 3, a phase detection portion (phase detection means) 5, a moving body determination portion (detection means) 6, and a control portion (control means) 7. The oscillation circuit 1 is configured to output an oscillation signal having a predetermined frequency. The transmitter 2 is configured to transmit to a monitoring space a continuous energy wave whose amplitude changes periodically according to the oscillation signal outputted from the oscillation circuit 1. The receiver 3 is configured to receive a reflected wave that is generated by the continuous energy wave being reflected by an object that exists in the monitoring space, and output a reception signal. The phase detection portion 5 is configured to mix the oscillation signal and the reception signal to obtain a Doppler signal depending on the frequency difference between the oscillation signal and the reception signal. The moving body determination portion 6 is configured to detect a moving body in the monitoring space by performing signal processing on the Doppler signal, and output a detection signal. The control portion 7 is configured to control each of the portions (means). The phase detection portion 5 includes a mixer (50A, 50B), a low pass filter (51A, 51B), a high pass filter (52A, 52B), and an amplifier (53A, 53B). The mixer (50A, 50B) is configured to mix the oscillation signal and the reception signal. The low pass filter (51A, 51B) is configured to pass only a frequency component, of an output signal of the mixer (50A, 50B), that is lower than the frequency of the oscillation signal. The high pass filter (52A, 52B) is configured to switch between two or more cutoff frequencies, and filter an output signal of the low pass filter (51A, 51B). The amplifier (53A, 53B) is configured to amplify an output signal of the high pass filter (52A, 52B). Also, the phase detection portion 5 is configured to regard an output signal of the amplifier (53A, 53B) as the Doppler signal. Also, the control portion 7 is configured to control the high pass filter (52A, 52B) such that the cutoff frequency of the high pass filter (52A, 52B) is relatively high in a period from when the transmitter 2 starts transmission of the continuous energy wave until a predetermined waiting time TA elapses. Also, the control portion 7 is configured to control the high pass filter (52A, 52B) such that the cutoff frequency of the high pass filter (52A, 52B) is relatively low after the waiting time TA elapses.

In other words, the moving body detection device 100 includes an oscillation circuit 1, a transmitter 2, a receiver 3, a phase detection portion 5, a moving body determination portion 6, and a control portion 7. The oscillation circuit 1 is configured to output an oscillation signal having a predetermined frequency. The transmitter 2 is configured to transmit a continuous energy wave whose amplitude changes periodically according to the oscillation signal outputted from the oscillation circuit 1 to a monitoring space. The receiver 3 is configured to receive a reflected wave that is generated by the continuous energy wave being reflected by an object that exists in the monitoring space, and output a reception signal. The phase detection portion 5 is configured to mix the oscillation signal and the reception signal to obtain a Doppler signal depending on the frequency difference between the oscillation signal and the reception signal. The moving body determination portion 6 is configured to detect a moving body in the monitoring space by performing signal processing on the Doppler signal, and output a detection signal. The phase detection portion 5 includes a mixer (50A, 50B), a low pass filter (51A, 51B), a high pass filter (52A, 52B), and an amplifier (53A, 53B). The mixer (50A, 50B) is configured to mix the oscillation signal and the reception signal. The low pass filter (51A, 51B) is configured to pass only a frequency component that is less than or equal to a first cutoff frequency that is lower than the frequency of the oscillation signal. The high pass filter (52A, 52B) is configured to switch a second cutoff frequency that is lower than the first cutoff frequency, and pass only a frequency component that is greater than or equal to the second cutoff frequency. The amplifier (53A, 53B) is configured to amplify an output signal that has passed through the low pass filter (51A, 51B) and the high pass filter (52A, 52B). Also, the phase detection portion 5 is configured to regard an output signal of the amplifier (53A, 53B) as a Doppler signal. Also, the control portion 7 is configured to control the high pass filter (52A, 52B) such that the second cutoff frequency that is applied during a period from when the transmitter 2 starts transmitting the continuous energy wave until a predetermined waiting time TA elapses is higher than the second cutoff frequency that is applied in a period after the waiting time TA elapses.

Also, the moving body detection device 100 of the present embodiment may have the following second feature in addition to the first feature.

According to the second feature, the high pass filter (52A, 52B) is constituted by a differentiation circuit including resistors 522 and 523 and a capacitor 520, and a combined resistance value of the resistors 522 and 523 is variable. The control portion 7 is configured to change the cutoff frequency by changing the combined resistance value of the resistors 522 and 523.

In other words, the high pass filter (52A, 52B) is constituted by a differentiation circuit including a resistance circuit A1 (resistors 522 and 523 and a switch 521) and a capacitor 520, and the combined resistance value of the resistance circuit A1 is variable. The control portion 7 is configured to change the cutoff frequency by changing the combined resistance value of the resistance circuit A1.

Also, the moving body detection device 100 of the present embodiment may have the following third feature in addition to the second feature.

According to the third feature, the high pass filter (52A, 52B) includes a suppression circuit B1 configured to suppress a change in the signal level of an output signal Vout that accompanies a change in the combined resistance value of the resistors 522 and 523.

In other words, the high pass filter (52A, 52B) includes a suppression circuit B1 configured to suppress a change in the signal level of an output signal Vout of the high pass filter (52A, 52B), the change in the signal level accompanying the change in the combined resistance value of the resistance circuit A1.

Also, the moving body detection device 100 of the present embodiment may have the following fourth feature in addition to the third feature.

According to the fourth feature, the high pass filter (52A, 52B) includes the capacitor 520 and the two or more parallelly connected resistors 522 and 523 that are connected to one end of the capacitor 520. Also, the high pass filter (52A, 52B) includes the switch (switch element) 521 that is connected in series to the resistor 522 of the two or more resistors 522 and 523. Also, the suppression circuit B1 is constituted by a series circuit of two or more resistors 524 and 525 to which is applied a predetermined constant voltage Vcc1, a connection point of the two or more resistors 524 and 525 being connected to one end of the resistor 523 whose other end is connected to the capacitor 520.

In other words, the resistance circuit A1 includes a parallel circuit of the two or more first resistors 522 and 523 that are electrically connected to one end of the capacitor 520, and the resistance circuit A1 further includes the switch (switch element) 521 that is connected in series to one first resistor 522 of the two or more first resistors 522 and 523. The control portion 7 is configured to change the combined resistance value of the resistance circuit A1 by switching the switch 521 on and off. The suppression circuit B1 is constituted by a series circuit of the two or more second resistors 524 and 525 that is electrically connected between a controll power supply (predetermined DC power supply) Vcc and ground. Also, in the suppression circuit Bl, a connection point of the two or more second resistors 524 and 525 is electrically connected to one end of the resistance circuit A1, out of both ends of the resistance circuit A1, which is different from another end of the resistance circuit A1 that is electrically connected to the capacitor 520.

Also, the moving body detection device 100 of the present embodiment may have the following fifth feature in addition to any of the first to fourth features.

According to the fifth feature, the phase detection portion 5 includes two or more of the mixers 50A and 50B, two or more of the low pass filters 51A and 51B, two or more of the high pass filters 52A and 52B, and two or more of the amplifiers 53A and 53B. All the high pass filters 52A and 52B are each configured such that the cutoff frequency thereof can be switched among two or more frequencies.

In other words, the phase detection portion 5 includes two or more of the mixers 50A and 50B, two or more of the low pass filters 51A and 51B, two or more of the high pass filters 52A and 52B, and two or more of the amplifiers 53A and 53B.

Also, the moving body detection device 100 of the present embodiment may have the following sixth feature in addition to any of the first to fifth features.

According to the sixth feature, the control portion 7 is configured to periodically switch between a halt mode of causing at least the transmitter 2 and the phase detection portion 5 to halt and a detection mode of causing the transmitter 2 and the phase detection portion 5 to operate.

Also, the moving body detection device 100 of the present embodiment may have the following seventh feature in addition to any of the first to sixth features.

According to the seventh feature, the oscillation circuit 1 is configured to variably change the oscillation frequency. The moving body determination portion 6, upon detecting a moving body by causing the oscillation circuit 1 to output the oscillation signal having a fundamental frequency to the transmitter 2, causes the oscillation circuit 1 to output one or more of the oscillation signals respectively having different frequencies that are different from the fundamental frequency to the transmitter 2. Then, the moving body determination portion 6 is configured to output the detection signal when a moving body is detected with each of the one or more oscillation signals respectively having different frequencies.

In other words, the oscillation circuit 1 is configured to variably change the oscillation frequency. The moving body determination portion 6 causes the oscillation circuit 1 to output the oscillation signals respectively having a first oscillation frequency and one or more second oscillation frequencies to the transmitter 2. Then, the moving body determination portion 6 is configured to output the detection signal when a moving body is detected with each of the oscillation signals respectively having the first oscillation frequency and the one or more second oscillation frequencies.

In the moving body detection device 100 of the present embodiment, the control portion 7 controls the high pass filter (52A, 52B) as follows. That is, the control portion 7 controls the high pass filter (52A, 52B) such that the second cutoff frequency that is applied during a period from when the transmitter 2 starts transmitting the continuous energy wave until a predetermined waiting time TA elapses is higher than the second cutoff frequency that is applied in a period after the waiting time TA elapses. Accordingly, the moving body detection device 100 of the present embodiment has an effect that the time required until the operation stabilizes can be reduced while a reduction in accuracy in detecting a slow-moving moving body can be suppressed.

## Claims

1. A moving body detection device (100) comprising:
an oscillation circuit (1) configured to output an oscillation signal having a predetermined frequency;
a transmitter (2) configured to transmit to a monitoring space a continuous energy wave whose amplitude changes periodically based on the oscillation signal that is outputted from the oscillation circuit (1);
a receiver (3) configured to receive a reflected wave that is generated by the continuous energy wave being reflected by an object that exists in the monitoring space, and output a reception signal;
a phase detection portion (5) configured to mix the oscillation signal and the reception signal to obtain a Doppler signal that depends on a frequency difference between the oscillation signal and the reception signal;
a moving body determination portion (6) configured to detect a moving body in the monitoring space by performing signal processing on the Doppler signal, and output a detection signal; and
a control portion (7),
the phase detection portion (5) comprising:
a mixer (50A, 50B) configured to mix the oscillation signal and the reception signal;
a low pass filter (51A, 51B) configured to pass only a frequency component that is less than or equal to a first cutoff frequency that is lower than a frequency of the oscillation signal;
a high pass filter (52A, 52B) configured to change a second cutoff frequency that is lower than the first cutoff frequency, and pass only a frequency component that is greater than or equal to the second cutoff frequency; and
an amplifier (53A, 53B) configured to amplify an output signal that has passed through the low pass filter (51A, 51B) and the high pass filter (52A, 52B),
the phase detection portion (5) being configured to regard an output signal of the amplifier (53A, 53B) as the Doppler signal,
**characterized in that**
the control portion (7) is configured to control the high pass filter (52A, 52B) such that the second cutoff frequency that is applied during a period from when the transmitter (2) starts transmitting the continuous energy wave until a predetermined waiting time (TA) elapses is higher than the second cutoff frequency that is applied in a period after the waiting time (TA) elapses, wherein: the high pass filter (52A, 52B) comprises a differentiation circuit comprising a resistance circuit (A1) and a capacitor (520), and a combined resistance value of the resistance circuit (A1) is variable, and
the control portion (7) is configured to change the second cutoff frequency by changing the combined resistance value of the resistance circuit (A1),
the high pass filter (52A, 52B) comprises a suppression circuit (B1) configured to suppress a change in a signal level of an output signal (Vout) of the high pass filter (52A, 52B), the change in the signal level accompanying a change in the combined resistance value of the resistance circuit (A1), and
the resistance circuit (A1) comprises a parallel circuit of two or more first resistors (522, 523) that are electrically connected to one end of the capacitor (520), the resistance circuit (A1) further comprising a switch element (521) that is connected in series to one first resistor (522) of the two or more first resistors (522, 523),
the control portion (7) is configured to change the combined resistance value of the resistance circuit (A1) by switching the switch element (521) on and off,
the suppression circuit (B1) is constituted by a series circuit of two or more second resistors (524, 525) that is electrically connected between a predetermined DC power supply (Vcc) and ground, and
a connection point of any of the two or more second resistors (524, 525) is electrically connected to one end of the resistance circuit (A1), out of both ends of the resistance circuit (A1), which is different from the one end that is electrically connected to the capacitor (520).

2. The moving body detection device (100) according to claim 1, wherein the phase detection portion (5) comprises two or more of the mixers (50A, 50B), two or more of the low pass filters (51A, 51B), two or more of the high pass filters (52A, 52B), and two or more of the amplifiers (53A, 53B).

3. The moving body detection device (100) according to claim 1, wherein the control portion (7) is configured to periodically switch between a halt mode of causing at least the transmitter (2) and the phase detection portion (5) to halt and a detection mode of causing the transmitter (2) and the phase detection portion (5) to operate.

4. The moving body detection device (100) according to claim 1,
wherein the oscillation circuit (1) is configured to variably change an oscillation frequency,
the moving body determination portion (6) is configured to cause the oscillation circuit (1) to output oscillation signals respectively having a first oscillation frequency and one or more second oscillation frequencies to the transmitter (2), and output the detection signal when a moving body is detected with each of the oscillation signals respectively having the first oscillation frequency and the one or more second oscillation frequencies.

## Patentansprüche

1. Vorrichtung (100) zur Erkennung mobiler Körper, aufweisend:
einen Oszillationsschaltkreis (1), der dazu eingerichtet ist, ein Oszillationssignal auszugeben, das eine vorbestimmte Frequenz aufweist;
einen Sender (2), der dazu eingerichtet ist, zu einem Überwachungsraum eine fortlaufende Energiewelle abzustrahlen, deren Amplitude sich periodisch in Abhängigkeit von dem Oszillationssignal, das von dem Oszillationsschaltkreis (1) ausgegeben wird, ändert;
einen Empfänger (3), der dazu eingerichtet ist, eine reflektierte Welle, die durch die fortlaufende Energiewelle erzeugt wird, die durch ein in dem Überwachungsraum vorhandenes Objekt reflektiert wird, zu empfangen und ein Empfangssignal auszugeben;
einen Phasenerfassungsabschnitt (5), der dazu eingerichtet ist, das Oszillationssignal und das Empfangssignal zu mischen, um ein Dopplersignal zu erhalten, das von einer Frequenzdifferenz zwischen dem Oszillationssignal und dem Empfangssignal abhängt;
einen Abschnitt (6) zur Bestimmung eines mobilen Körpers, der dazu eingerichtet ist, einen mobilen Körper in dem Überwachungsraum zu erfassen, indem eine Signalverarbeitung an dem Dopplersignal durchgeführt wird, und ein Erfassungssignal auszugeben; und
einen Steuerabschnitt (7),
wobei der Phasenerfassungsabschnitt (5) aufweist:
einen Mischer (50A, 50B), der dazu eingerichtet ist, das Oszillationssignal und das Empfangssignal zu mischen;
ein Tiefpassfilter (51A, 51B), das dazu eingerichtet ist, lediglich eine Frequenzkomponente durchzulassen, die kleiner oder gleich einer ersten Grenzfrequenz ist, die niedriger ist als eine Frequenz des Oszillationssignals;
ein Hochpassfilter (52A, 52B), das dazu eingerichtet ist, eine zweite Grenzfrequenz, die niedriger als die erste Grenzfrequenz ist, zu ändern und lediglich eine Frequenzkomponente durchzulassen, die höher oder gleich der zweiten Grenzfrequenz ist; und
einen Verstärker (53A, 53B), der dazu eingerichtet ist, ein Ausgangssignal zu verstärken, das das Tiefpassfilter (51A, 51B) und das Hochpassfilter (52A, 52B) durchlaufen hat, wobei der Phasenerfassungsabschnitt (5) dazu eingerichtet ist, ein Ausgangssignal des Verstärkers (53A, 53B) als das Dopplersignal zu berücksichtigen,
**dadurch gekennzeichnet, dass**
der Steuerabschnitt (7) dazu eingerichtet ist, das Hochpassfilter (52A, 52B) so zu steuern, dass die zweite Grenzfrequenz, die während einer Zeitspanne von dem Zeitpunkt an, in dem der Sender (2) beginnt, die fortlaufende Energiewelle abzustrahlen, bis zum Verstreichen einer vorbestimmten Wartezeit (TA) angewendet wird, höher ist als die zweite Grenzfrequenz, die in einer Zeitspanne nach dem Verstreichen der Wartezeit (TA) angewendet wird, wobei: das Hochpassfilter (52A, 52B) eine Differenzierungsschaltung aufweist, die einen Widerstandsschaltkreis (A1) und einen Kondensator (520) aufweist, und ein zusammengeführter Widerstandswert des Widerstandsschaltkreises (A1) variabel ist, und
der Steuerabschnitt (7) dazu eingerichtet ist, die zweite Grenzfrequenz durch ein Verändern des zusammengeführten Widerstandswerts des Widerstandsschaltkreises (A1) zu ändern,
das Hochpassfilter (52A, 52B) einen Unterdrückungsschaltkreis (B1) aufweist, der dazu eingerichtet ist, eine Änderung eines Signalpegels eines Ausgabesignals (Vout) des Hochpassfilters (52A, 52B) zu unterdrücken, wobei die Änderung des Signalpegels mit einer Änderung des zusammengeführten Widerstandswerts des Widerstandsschaltkreises (A1) einhergeht, und
der Widerstandsschaltkreis (A1) einen parallelen Stromkreis aus zwei oder mehreren ersten Widerständen (522, 523) aufweist, die mit einem Ende des Kondensators (520) elektrisch verbunden sind, wobei der Widerstandsschaltkreis (A1) ferner ein Schaltelement (521) aufweist, das mit einem ersten Widerstand (522) der zwei oder der mehreren ersten Widerstände (522, 523) in Serie verbunden ist,
der Steuerabschnitt (7) dazu eingerichtet ist, dem zusammengeführten Widerstandswert des Widerstandsschaltkreises (A1) durch ein Ein- und Ausschalten des Schaltelements (521) zu ändern,
der Unterdrückungsschaltkreis (B1) einen seriellen Schaltkreis von zwei oder mehreren zweiten Widerständen (524, 525) aufweist, die zwischen einer vorbestimmten Gleichstromversorgung (Vcc) und Masse elektrisch verbunden sind, und
ein Verbindungspunkt eines beliebigen der zwei oder der mehreren zweiten Widerstände (524, 525) mit einem Ende des Widerstandsschaltkreises (A1) aus einem der beiden Enden des Widerstandsschaltkreises (A1), das sich von dem mit dem Kondensator (520) elektrisch verbundenen Ende unterscheidet, elektrisch verbunden ist.

2. Vorrichtung (100) zur Erkennung mobiler Körper nach Anspruch 1, wobei der Phasenerfassungsabschnitt (5) zwei oder mehrere der Mischer (50A, 50B), zwei oder mehrere der Tiefpassfilter (51A, 51B), zwei oder mehrere der Hochpassfilter (52A, 52B) und zwei oder mehrere der Verstärker (53A, 53B) aufweist.

3. Vorrichtung (100) zur Erkennung mobiler Körper nach Anspruch 1, wobei der Steuerabschnitt (7) dazu eingerichtet ist, periodisch zwischen einem Haltmodus, bei dem mindestens der Sender (2) und der Phasenerfassungsabschnitt (5) dazu veranlasst werden, zu halten, und einem Erfassungsmodus umzuschalten, bei dem der Sender (2) und der Phasenerfassungsabschnitt (5) dazu veranlasst werden, zu arbeiten.

4. Vorrichtung (100) zur Erkennung mobiler Körper nach Anspruch 1,
wobei der Oszillationsschaltkreis (1) dazu eingerichtet ist, eine Schwingungsfrequenz variabel zu verändern,
der Abschnitt (6) zur Bestimmung eines mobilen Körpers dazu eingerichtet ist, den Oszillationsschaltkreis (1) dazu zu veranlassen, Oszillationssignale, die eine erste Schwingungsfrequenz bzw. eine oder mehrere zweite Schwingungsfrequenzen aufweisen, an den Sender (2) auszugeben und das Erfassungssignal auszugeben, wenn ein mobiler Körper erkannt ist, wobei jedes der Oszillationssignale die erste Schwingungsfrequenz bzw. die eine oder die mehreren zweiten Schwingungsfrequenzen aufweist.

## Revendications

1. Dispositif de détection de corps mobile (100) comprenant :
un circuit oscillant (1) configuré pour sortir un signal d'oscillation ayant une fréquence prédéterminée ;
un émetteur (2) configuré pour émettre vers un espace de surveillance une onde d'énergie continue dont l'amplitude change périodiquement sur la base du signal d'oscillation qui est sorti du circuit oscillant (1) ;
un récepteur (3) configuré pour recevoir une onde réfléchie qui est générée par l'onde d'énergie continue qui est réfléchie par un objet qui existe dans l'espace de surveillance, et sortir un signal de réception ;
une partie de détection de phase (5) configurée pour mélanger le signal d'oscillation et le signal de réception pour obtenir un signal Doppler qui dépend d'une différence de fréquence entre le signal d'oscillation et le signal de réception ;
une partie de détermination de corps mobile (6) configurée pour détecter un corps mobile dans l'espace de surveillance en effectuant un traitement de signal sur le signal Doppler, et sortir un signal de détection ; et
une partie de commande (7),
la partie de détection de phase (5) comprenant :
un mélangeur (50A, 50B) configuré pour mélanger le signal d'oscillation et le signal de réception ;
un filtre passe-bas (51A, 51B) configuré pour laisser passer uniquement une composante de fréquence qui est inférieure ou égale à une première fréquence de coupure qui est inférieure à une fréquence du signal d'oscillation ;
un filtre passe-haut (52A, 52B) configuré pour changer une deuxième fréquence de coupure qui est inférieure à la première fréquence de coupure, et laisser passer uniquement une composante de fréquence qui est supérieure ou égale à la deuxième fréquence de coupure ; et
un amplificateur (53A, 53B) configuré pour amplifier un signal de sortie qui est passé à travers le filtre passe-bas (51A, 51B) et le filtre passe-haut (52A, 52B),
la partie de détection de phase (5) étant configurée pour considérer un signal de sortie de l'amplificateur (53A, 53B) en tant que signal Doppler,
**caractérisé en ce que**
la partie de commande (7) est configurée pour commander le filtre passe-haut (52A, 52B) de sorte que la deuxième fréquence de coupure qui est appliquée pendant une période de l'instant auquel l'émetteur (2) débute l'émission de l'onde d'énergie continue jusqu'à ce qu'un temps d'attente (TA) prédéterminé se soit écoulé soit supérieure à la deuxième fréquence de coupure qui est appliquée dans une période après que le temps d'attente (TA) se soit écoulé, dans lequel : le filtre passe-haut (52A, 52B) comprend un circuit de différentiation comprenant un circuit résistif (A1) et un condensateur (520), et une valeur de résistance combinée du circuit résistif (A1) est variable, et
la partie de commande (7) est configurée pour changer la deuxième fréquence de coupure en changeant la valeur de résistance combinée du circuit résistif (A1),
le filtre passe-haut (52A, 52B) comprend un circuit de suppression (B1) configuré pour supprimer un changement d'un niveau de signal d'un signal de sortie (Vout) du filtre passe-haut (52A, 52B), le changement du niveau de signal accompagnant un changement de la valeur de résistance combinée du circuit résistif (A1), et
le circuit résistif (A1) comprend un circuit parallèle de deux premières résistances (522, 523) ou plus qui sont connectées électriquement à une extrémité du condensateur (520), le circuit résistif (A1) comprenant en outre un élément de commutation (521) qui est connecté en série à une première résistance (522) des deux premières résistances (522, 523) ou plus,
la partie de commande (7) est configurée pour changer la valeur de résistance combinée du circuit résistif (A1) en fermant et en ouvrant l'élément de commutation (521),
le circuit de suppression (B1) est constitué par un circuit série de deux deuxièmes résistances (524, 525) ou plus qui est connecté électriquement entre une alimentation continue (Vcc) prédéterminée et une masse, et
un point de connexion de l'une quelconque des deux deuxièmes résistances (524, 525) ou plus est connecté électriquement à une extrémité du circuit résistif (A1), parmi les deux extrémités du circuit résistif (A1), qui est différente de ladite une extrémité qui est connectée électriquement au condensateur (520).

2. Dispositif de détection de corps mobile (100) selon la revendication 1, dans lequel la partie de détection de phase (5) comprend deux des mélangeurs (50A, 50B) ou plus, deux des filtres passe-bas (51A, 51B) ou plus, deux des filtres passe-haut (52A, 52B) ou plus, et deux des amplificateurs (53A, 53B) ou plus.

3. Dispositif de détection de corps mobile (100) selon la revendication 1, dans lequel la partie de commande (7) est configurée pour commuter périodiquement entre un mode d'arrêt pour amener au moins l'émetteur (2) et la partie de détection de phase (5) à s'arrêter et un mode de détection pour amener l'émetteur (2) et la partie de détection de phase (5) à fonctionner.

4. Dispositif de détection de corps mobile (100) selon la revendication 1,
dans lequel le circuit oscillant (1) est configuré pour changer de manière variable une fréquence d'oscillation,
la partie de détermination de corps mobile (6) est configurée pour amener le circuit oscillant (1) à sortir des signaux d'oscillation ayant respectivement une première fréquence d'oscillation et une ou plusieurs deuxièmes fréquences d'oscillation vers l'émetteur (2), et sortir le signal de détection lorsqu'un corps mobile est détecté avec chacun des signaux d'oscillation ayant respectivement la première fréquence d'oscillation et lesdites une ou plusieurs deuxièmes fréquences d'oscillation.
